# EUROPÄISCHE PATENTSCHRIFT

(11) **EP 0 753 683 B1**
(45) Veröffentlichungstag und Bekanntmachung des Hinweises auf die Patenterteilung: **09.02.2000**
(21) Anmeldenummer: 96109260.8
(22) Anmeldetag: 10.06.1996
(51) Int. Cl.: F16D 65/38, F16D 65/56

(54) **Scheibenbremse**
Disc brake
Frein à disque

(30) Priorität: 10.07.1995 DE 19525048
(43) Veröffentlichungstag der Anmeldung: 15.01.1997
(73) Patentinhaber: PERROT BREMSEN GmbH, 68229 Mannheim (DE)
(72) Erfinder: Herbert, Andreas, Dipl.-Ing., 64285 Darmstadt (DE); Macke, Wlodzimierz, Dipl.-Ing., 68542 Heddesheim (DE)
(74) Vertreter: Patentanwälte Leinweber & Zimmermann

(56) Entgegenhaltungen:
- DE-A- 4 307 017
- DE-A- 4 323 292

## Beschreibung

Die Erfindung betrifft eine Scheibenbremse mit einem Bremssattel, der mit seinen beiden Sattelschenkeln eine Bremsscheibe und an die Bremsscheibe anlegbare Bremsbacken beidseits der Bremsscheibe übergreift, einer Zuspanneinrichtung auf einer Seite der Bremsscheibe mit einer Zuspannwelle, die im wesentlichen parallel zur Hauptebene der Bremsscheibe liegt und sich bremsscheibenabgewandt an dem Bremssattel abstützt, während sie bremsscheibenzugewandt in Wirkverbindung mit der zuspannseitigen Bremsbacke steht, und die eine Nockenkontur hat, die bei Verdrehen der Zuspannwelle um ihre parallel zur Hauptebene der Bremsscheibe sich erstreckende Längsachse zu einer Relativverschiebung von Bremssattel und Bremsbacke in Axialrichtung der Bremsscheibe führt, wenn an einem radial von der Zuspannwelle auskragenden Schwenkhebel eine Zuspannkraft eingeleitet wird, einer Nachstelleinrichtung, die einerseits mit der Zuspannwelle und andererseits über ein Abtriebselement mit mindestens einer Druckspindel gekoppelt ist, deren Verdrehen zu einer Änderung des Abstandes der zuspannseitigen Bremsbacke von der Bremsscheibe führt, wobei das Abtriebselement zwar drehfest, aber axial verschieblich mit der Druckspindel gekoppelt ist.

Eine solche Scheibenbremse ist in der Ausführung mit einer einzigen Druckspindel aus der DE 43 23 292 A1 bekannt. Eine zweispindlige Ausführung zeigt die DE 43 07 017 A1.

Bei den bekannten Scheibenbremsen können sich Herstellungs- und Lagerungsabweichungen zwischen dem Abtriebselement und der zugehörigen Druckspindel dahingehend auswirken, daß die Leichtgängigkeit und die Nachstellgenauigkeit der Nachstellung beeinträchtigt werden, zumal zwischen diesen Teilen unterschiedliche Relativverschiebungen stattfinden. Diese Abweichungen beeinflussen dann auch den Montagevorgang beim Zusammenbau dieser Teile. Außerdem können Schwingungen des Bremssattels einerseits und Schwingungen der Bremseninnenteile andererseits in Verbindung mit Lagerungsabweichungen zwischen diesen Teilen zu einer Verfälschung der Nachstellgröße führen.

Der Erfindung liegt demzufolge die Aufgabe zugrunde, die Scheibenbremse der eingangs genannten Art derart weiterzubilden, daß sich Herstellungs- und Lagerungsabweichungen sowie Schwingungen nicht auf die Nachstellgröße auswirken und daß die Montage vereinfacht wird.

Erfindungsgemäß wird die gestellte Aufgabe bei der Scheibenbremse der eingangs genannten Art dadurch gelöst, daß zumindest ein Teil des Abtriebselements in mindestens zwei zu der Längsachse der Druckspindel senkrechten Richtungen bezüglich der Druckspindel verschieblich ist.

Durch diese Verschieblichkeit können aus Herstellungs- und Lagerabweichungen resultierende Relativbewegungen zwischen dem Abtriebselement auf der einen Seite und der zugehörigen Druckspindel auf der anderen Seite kompensiert und eine Leichtgängigkeit der Nachstellung sichergestellt werden.

Die Verschiebbarkeit nimmt auch auftretende Schwingungen der Bremsenteile auf, so daß eine Übertragung von dem einen auf das andere Teil nicht erfolgen kann und somit die Nachstellgröße nicht verfälscht bzw. beeinflußt wird.

Schließlich erlaubt die genannte Verschieblichkeit geringere Präzision bei der Montage.

Erfindungsgemäß bevorzugt erstrecken sich das Abtriebselement und die Druckspindel ineinander, wobei in dem dazwischen entstehenden Ringraum eine Profilscheibe vorgesehen ist, die einerseits mit dem Abtriebselement und andererseits mit der Druckspindel drehfest gekoppelt, jedoch in einer senkrecht auf der Längsachse der Druckspindel stehenden ersten Richtung bezüglich der Druckspindel und in einer senkrecht auf der Längsachse der Druckspindel stehenden und nicht mit der ersten Richtung zusammenfallenden zweiten Richtung bezüglich des Abtriebselements verschieblich ist.

Die Verwendung einer solchen Profilscheibe, deren Außenprofil eine Verschiebung bezüglich der Druckspindel (oder des Abtriebselements) und deren Innenprofil eine Verschiebung bezüglich des Abtriebselements (oder der Druckspindel zuläßt), erlaubt einen insgesamt besonders einfachen Aufbau.

Erfindungsgemäß können ein Ansatz an dem Abtriebselement, der in einer Ausbuchtung in der Profilscheibe eingreift, sowie ein Ansatz an der Profilscheibe, der in einen Schlitz in der Druckspindel eingreift, vorgesehen sein.

Die Profilscheibe kann dabei an der Druckspindel oder an dem Abtriebselement axial unverschieblich gehalten sein. Jedoch ist es erfindungsgemäß bevorzugt, daß die Profilscheibe in Richtung der Längsachse der Druckspindel und weg von der Bremsscheibe unverschieblich an der Druckspindel gehalten ist.

Dabei kann die Profilscheibe in Richtung der Längsachse der Druckspindel gesehen ein Gewinde der Druckspindel zumindest teilweise überdecken, das zu einer Änderung des Abstands der zuspannseitigen Bremsbacke von der Bremsscheibe bei Verdrehen der Druckspindel führt.

Die Druckspindel kann dabei mit dem Gewinde in ein Druckstück mit einem Anlaufbereich eingeschraubt sein, wobei die Profilscheibe beim Einschrauben der Druckspindel über einen Grenzwert hinaus an dem Anlaufbereich anschlägt.

Bei diesen Ausgestaltungen kann die Profilscheibe gleichzeitig als Ausschraubbegrenzung für die Druckspindel dienen.

Prinzipiell können die beiden senkrecht auf der Längsachse der Druckspindel stehenden Richtungen der Relativverschieblichkeit von Druckspindel und Abtriebselement beliebig zueinander liegen, solange sie nicht miteinander identisch sind. Bevorzugt ist es jedoch, daß die beiden senkrecht auf der Längsachse der Druckspindel stehenden Richtungen senkrecht aufeinanderstehen.

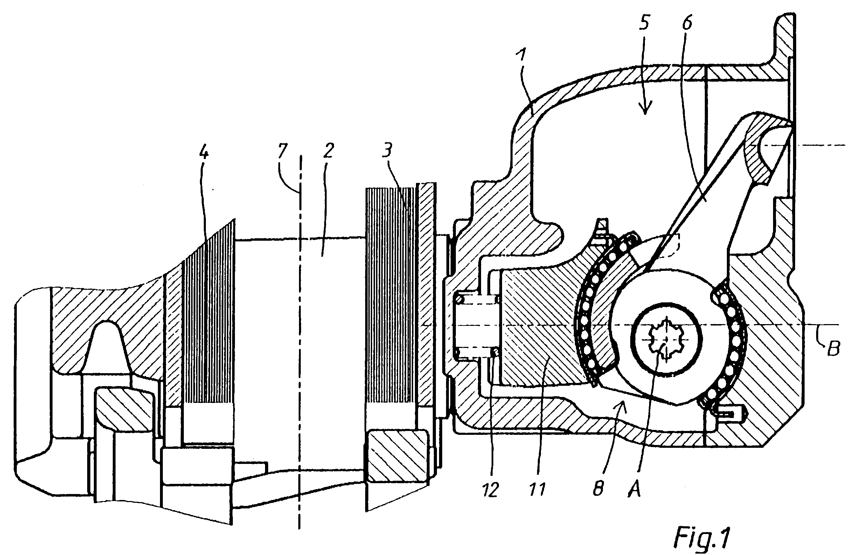

Nachstehend ist die Erfindung anhand bevorzugter Ausführungsbeispiele unter Bezugnahme auf die Zeichnung mit weiteren Einzelheiten näher erläutert. Dabei zeigen
- Fig. 1: eine senkrecht zur Bremsscheibenebene geschnittene Ansicht einer Scheibenbremse,
- Fig. 2: eine ebenfalls senkrecht zur Bremsscheibenebene, jedoch auch senkrecht zu der Ansicht nach Fig. 1 geschnittene Ansicht der Scheibenbremse nach Fig. 1
- Fig. 3: eine Teilschnittansicht der Scheibenbremse nach den Fig. 1 und 2,
- Fig. 4: einen Schnitt durch eine Druckspindel,
- Fig. 4a: eine Stirnansicht der Druckspindel nach Fig. 4,
- Fig. 5: eine Profilscheibe,
- Fig. 6: eine Stirnansicht eines Abtriebelements und

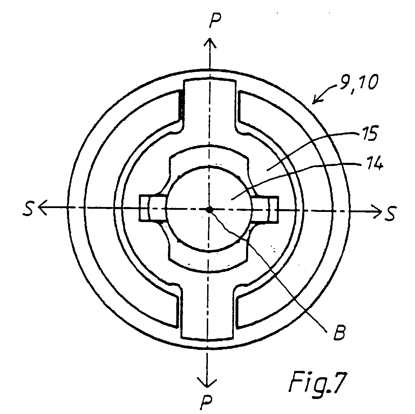

- Fig. 7: eine Axialansicht der in den Fig. 4 bis 6 gezeigten Elemente im Zusammenspiel.

Bei der in den Figuren gezeigten Scheibenbremse handelt es sich um eine Gleitsattel-Scheibenbremse. Sie weist einen Bremssattel 1 auf, der in üblicher Weise mit seinen beiden Schenkeln eine Bremsscheibe 2 übergreift. Beidseitig der Bremsscheibe 2 sind Breckbacken 3, 4 in einem nicht gezeigten Bremsenträger bzw. im Bremssattel 1 geführt und abgestützt, und der Bremssattel 1 ist in nicht dargestellter Weise mittels Führungsmitteln quer zur Bremsscheibe 2 verschieblich gelagert. Der Bremssattel 1 ist einseitig mit einer Zuspanneinrichtung 5 ausgestattet. Die Zuspanneinrichtung 5 weist einen Schwenkhebel 6 auf, dessen Schwenkachse A im wesentlichen parallel zur Hauptebene 7 der Bremsscheibe 2 liegt. Die Erfindung ist aber nicht auf dieses Ausführungsbeispiel beschränkt. Vielmehr kann sie auch bei Bremsen Anwendung finden, bei denen die Schwenkachse des Bremshebels ihre Lage mit zunehmender Zuspannung ändert. Der Bremshebel 6 ist radial an einer Zuspannwelle 8 angebracht. Der Bremshebel 6 und die Zuspannwelle 8 liegen innerhalb des Bremssattels 1.

Die Zuspannwelle 8 erstreckt sich entlang der Schwenkachse A und weist eine Nockenkontur auf, die bei einem Verdrehen um ihre Längsachse zu einer Relativverschiebung des Bremssattels 1 und der Bremsbacke 3 in Axialrichtung der Bremsscheibe 2 führt. Dabei wird die Kraft von der Zuspannwelle 8 über vorgelagerte Druckspindeln 9, 10 auf die Bremsbacke 3 übertragen.

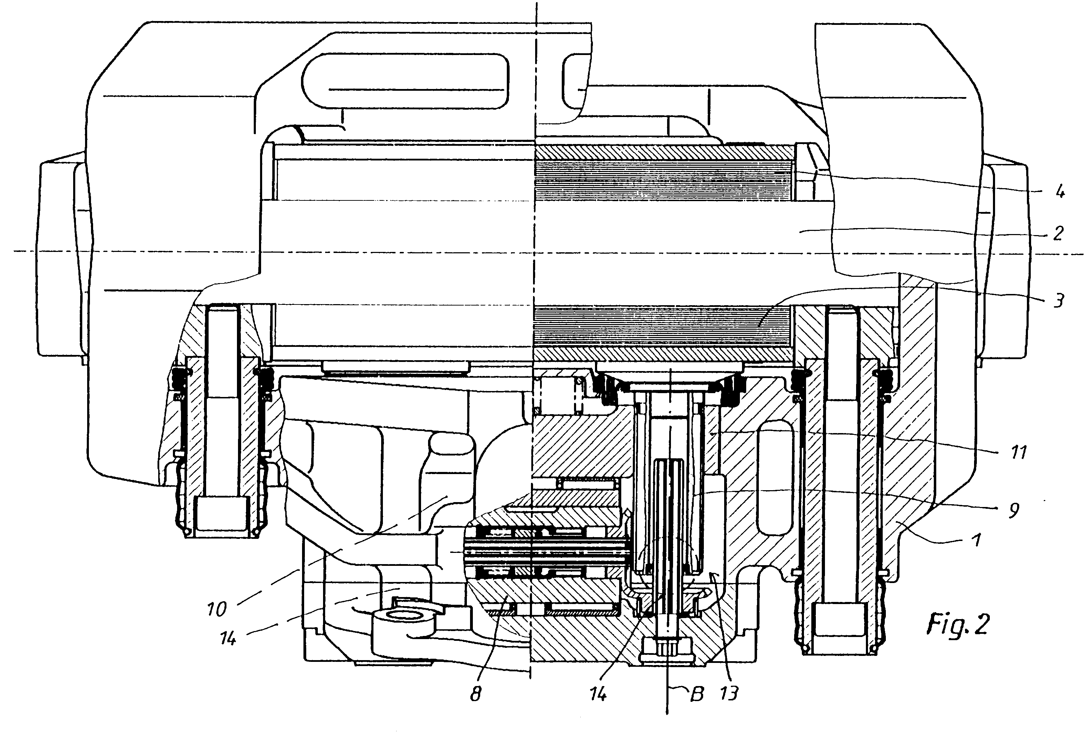

Gemäß Fig. 2 sind bei dieser Ausführung zwei Spindeln 9 und 10 vorgesehen, die in einem Druckstück 11 angeordnet sind. Wiederum gilt aber, daß die Erfindung nicht auf diese Ausführungsform beschränkt ist. Vielmehr ist sie auch anwendbar bei einer mittig im Druckstück angeordneten einzelnen Spindel, wie auch bei Ein- oder Zwei-Spindelbremsen, bei denen gar kein Druckstück vorgesehen ist, weil die nachstellbaren Spindeln im Bremssattel 1 gelagert sind.

Die Zuspanneinrichtung 5 weist bremsscheibenseitig mindestens eine Druckfeder 12 auf, die gegenüber dem Bremssattel 1 abgestützt ist, um die Zuspanneinrichtung 5 mit dem Schwenkhebel 6 in Richtung einer Ruhelage vorzuspannen.

Zum Ausgleich des Belagverschleisses ist eine Nachstelleinrichtung 13 vorgesehen, die einerseits mit der Zuspannwelle 8 und andererseits mit den Druckspindeln 9, 10 gekoppelt ist, um die Drehbewegung der Zuspannwelle 8 auf die Druckspindeln 9, 10 im Sinne eines Herausschraubens in Richtung der Bremsscheibe 2 zu übertragen. Die Nachstelleinrichtung 13 beinhaltet eine kraftabhängige Einwegkupplung, die ein übermäßiges Nachstellen verhindert.

Wenngleich in den Figuren zwei Spindeln 9 und 10 gezeigt sind, wird nachstehend aus Gründen der Vereinfachung nur das Zusammenspiel der Nachstelleinrichtung mit der Druckspindel 9 erläutert.

Die Nachstelleinrichtung 13 weist ein Abtriebselement 14 auf, das sich in die Druckspindel 9 hinein erstreckt. Das Abtriebselement 14 hat eine profilierte Außenkontur. Seine Längsachse fällt mit der Längsachse B der Druckspindel 9 zusammen.

In dem Ringraum zwischen dem Abtriebselement 14 und der Druckspindel 9 befindet sich eine Profilscheibe 15 mit dem Außenprofil des Abtriebselements 14 entsprechendem Innenprofil zur Drehkopplung der Profilscheibe 15 mit dem Abtriebselement 14. Jedoch sind die beiden Profile des Abtriebselements 14 und der Profilscheibe 15 derart, daß die beiden Elemente in einer senkrecht auf der Längsachse B stehenden Richtung S gegeneinander verschieblich sind. Dazu dienen Ausbuchtungen 21 in einer Öffnung 20 der Profilscheibe 15, in die Ansätze 22 des Abtriebselements 14 eingreifen. Die Ansätze 22 haben eine geringere Radiallänge als die Ausbuchtungen 21.

Nach dem gleichen Prinzip ist die Profilscheibe 15 mit der Druckspindel 9 gekoppelt: Auch hier greifen Ansätze 18 der Profilscheibe 15 in Schlitze 17 in der Druckspindel 9 ein.

Selbstverständlich gilt, daß der Außenradius des Abtriebselements 14 bzw. der Außenradius der Profilscheibe 15, jeweils abgesehen von den Ansätzen 18 und 22, kleiner ist als der entsprechende Innenradius der Profilscheibe 15 bzw. der Druckspindel 9. Der Außenumfang der Profilscheibe 15 an den Ansätzen 18 ist mit 23 bezeichnet.

Eine Richtung P der Verschieblichkeit der Profilscheibe 15 gegenüber der Druckspindel 9 steht bei dem in den Figuren gezeigten Ausführungsbeispiel senkrecht auf der Verschieberichtung S.

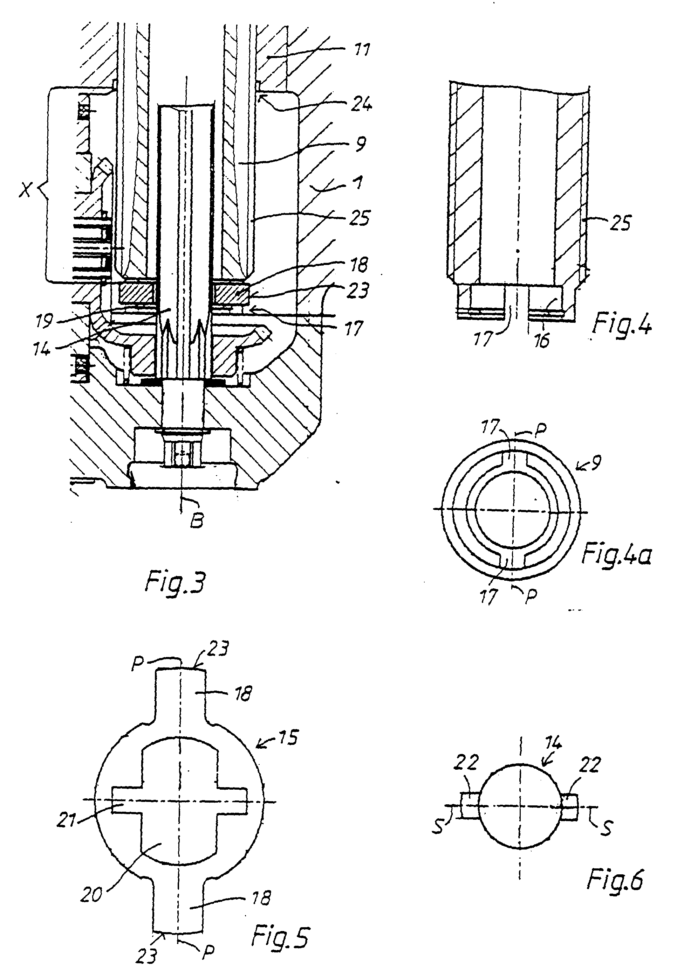

Die Profilscheibe 15 ist innerhalb der Druckspindel 9 in einem Haltebereich 16 mit einem Sicherungsring 19 axial unverschieblich gehalten. Die Länge der Ansätze 18 der Profilscheibe ist so bemessen, daß sie bei einem Herausschrauben der Druckspindel 9 aus dem Druckstück 11 um die Strecke X (Fig. 3) an einem Anlaufbereich 24 des Druckstücks 11 anschlagen. Dazu erstrecken sie sich mit ihrem Außenumfang 23 in Radialrichtung bezüglich der Längsachse B über den jeweiligen Nutgrund eines Gewindes 25 der Druckspindel 9 hinaus. Dadurch ist eine Sicherung gegen übermäßiges Ausschrauben der Druckspindel 9 geschaffen.

Wie sich aus den obigen Erläuterungen ergibt, sind erfindungsgemäß das Abtriebselement 14 und die Druckspindel 9 bezüglich einer Drehung um ihre gemeinsame Achse B miteinander gekoppelt, wobei sie jedoch in Richtung der genannten Achse B sowie in den auf der Achse B senkrecht stehenden Richtungen S und P gegeneinander verschieblich sind. Dadurch ist eine Drehkopplung geschaffen, die keine Schwingungen überträgt, Herstellungs- und Lagerungsabweichungen ausgleicht und die Montage vereinfacht.

Die in der vorstehenden Beschreibung, den Ansprüchen sowie der Zeichnung offenbarten Merkmale der Erfindung können sowohl einzeln als auch in den beanspruchten Kombinationen für die Verwirklichung der Erfindung in ihren verschiedenen Ausführungsformen wesentlich sein.

### Bezugszeichenliste:

- 1: Bremssattel
- 2: Bremsscheibe
- 3: Bremsbacke
- 4: Bremsbacke
- 5: Zuspanneinrichtung
- 6: Schwenkhebel
- 7: Hauptebene der Bremsscheibe
- 8: Zuspannwelle
- 9: Druckspindel
- 10: Druckspindel
- 11: Druckstück
- 12: Druckfeder
- 13: Nachstelleinrichtung
- 14: Abtriebselement
- 15: Profilscheibe
- 16: Haltebereich
- 17: Schlitz
- 18: Ansatz
- 19: Sicherungsring
- 20: Öffnung
- 21: Ausbuchtung
- 22: Ansatz
- 23: Außenumfang
- 24: Anlaufbereich
- 25: Gewinde
- A: Schwenkachse
- B: Längsachse
- P: erste Richtung
- S: zweite Richtung
- X: Nachstellänge

## Patentansprüche

1. Scheibenbremse mit
a) einem Bremssattel (1), der mit seinen beiden Sattelschenkeln eine Bremsscheibe (2) und an die Bremsscheibe (2) anlegbare Bremsbacken (3, 4) beidseits der Bremsscheibe (2) übergreift,
b) einer Zuspanneinrichtung (5) auf einer Seite der Bremsscheibe (2) mit einer Zuspannwelle (8), die im wesentlichen parallel zur Hauptebene (7) der Bremsscheibe (2) liegt und sich bremsscheibenabgewandt an dem Bremssattel (1) abstützt, während sie bremsscheibenzugewandt in Wirkverbindung mit der zuspannungsseitigen Bremsbacke (3) steht, und die eine Nockenkontur hat, die bei Verdrehen der Zuspannwelle (8) um ihre parallel zur Hauptebene (7) der Bremsscheibe (2) sich erstreckende Längsachse zu einer Relativverschiebung von Bremssattel (1) und Bremsbacke (3) in Axialrichtung der Bremsscheibe (2) führt, wenn an einem radial von der Zuspannwelle auskragenden Schwenkhebel (6) eine Zuspannkraft eingeleitet wird,
c) einer Nachstelleinrichtung (13), die einerseits mit der Zuspannwelle (8) und andererseits über ein Abtriebselement (14) mit mindestens einer Druckspindel (9, 10) gekoppelt ist, deren Verdrehen zu einer Änderung des Abstandes der zuspannungsseitigen Bremsbacke (3) von der Bremsscheibe (2) führt, wobei das Abtriebselement (14) zwar drehfest, aber axial verschieblich mit der Druckspindel (9, 10) gekoppelt ist,
dadurch gekennzeichnet, daß
zumindest ein Teil des Abtriebselements (14) in mindestens zwei zu der Längsachse (B) der Druckspindel (9, 10) senkrechten Richtungen (P, S) bezüglich der Druckspindel (9, 10) verschieblich ist.

2. Scheibenbremse nach Anspruch 1, dadurch gekennzeichnet, daß sich das Abtriebselement (14) und die Druckspindel (9, 10) ineinander erstrecken, wobei in dem dazwischen entstehenden Ringraum eine Profilscheibe (15) vorgesehen ist, die sowohl mit dem Abtriebselement (14) als auch mit der Druckspindel (9, 10) drehfest gekoppelt, jedoch in einer senkrecht auf der Längsachse (B) der Druckspindel (9, 10) stehenden ersten Richtung (P) bezüglich der Druckspindel (9, 10) und in einer senkrecht auf der Längsachse (B) der Druckspindel (9, 10) stehenden und nicht mit der ersten Richtung zusammenfallenden zweiten Richtung (S) bezüglich des Abtriebselements (14) verschieblich ist.

3. Scheibenbremse nach Anspruch 2, gekennzeichnet durch einen Ansatz (22) an dem Abtriebselement (14) der in eine Ausbuchtung (21) in der Profilscheibe (15) eingreift, sowie durch einen Ansatz (18) an der Profilscheibe (15), der in einen Schlitz (17) in der Druckspindel (9, 10) eingreift.

4. Scheibenbremse nach Anspruch 2 oder 3, dadurch gekennzeichnet, daß die Profilscheibe (15) in Richtung der Längsachse (B) der Druckspindel (9, 10) und weg von der Bremsscheibe (2) unverschieblich an der Druckspindel (9, 10) gehalten ist.

5. Scheibenbremse nach einem der Ansprüche 2 bis 4, dadurch gekennzeichnet, daß die Profilscheibe (15) in Richtung der Längsachse (B) der Druckspindel (9, 10) gesehen ein Gewinde (25) der Druckspindel (9, 10) zumindest teilweise überdeckt, das zu einer Änderung des Abstands der zuspannseitigen Bremsbacke (3) von der Bremsscheibe (2) bei Verdrehen der Druckspindel (9, 10) führt.

6. Scheibenbremse nach Anspruch 5, dadurch gekennzeichnet, daß die Druckspindel (9, 10) mit dem Gewinde (25) in ein Druckstück (11) mit einem Anlaufbereich (24) eingeschraubt ist, wobei die Profilscheibe (15) bei Einschrauben der Druckspindel (9, 10) über einen Grenzwert hinaus an dem Anlaufbereich (24) anschlägt.

7. Scheibenbremse nach einem der vorangehenden Ansprüche, dadurch gekennzeichnet, daß die beiden senkrecht auf der Längsachse (B) der Druckspindel (9, 10) stehenden Richtungen senkrecht aufeinander stehen.

## Claims

1. Disc Brake with
a) a brake caliper (1) consisting of two caliper sections and brake pads (3, 4) straddling a brake disc (2),
b) a clamping unit (5) on one side of the brake disc (2) with a clamping shaft (8) positioned parallel to the centreline (7) of the brake disc (2) and anchored opposite of the brake disc against the brake caliper (1), the clamping shaft is equipped with a cam which upon parallel rotation of the shaft (8) along the brake disc (2) centreline (7) forces the brake caliper (1) and brake pad (3) axially against the brake disc (2) when force is exerted upon the radially positioned lever arm (6),
c) a adjuster unit (13) coupled on one side to the clamping shaft (8) and on the other side via a driving element (14) to a minimum of one pressure screw (9, 10) the rotation of which causes the distance between the brake pad (3) on the clamping side and the brake disc (20) to vary, whereby the driving element (14) moves axially with the pressure screw (9, 10) but does not rotate,
characterised by
at least part of the friction element (14) being movable in two vertical directions parallel to the centreline (B) of the pressure screw (9, 10).

2. Disc Brake according to claim 1, characterised by the driving element (14) and pressure screw (9, 10) being coupled through a profiled disc (15) preventing the pressure screw (9, 10) from turning but allowing vertical movement of the pressure screw (9, 10) in the first direction (P) parallel with the centreline of the pressure screw (9, 10) but preventing movement in the second direction (S) relative to the friction element (14).

3. Disc Brake according to claim 2, characterised by a projection (22) on the driving element (14) which engages an indentation in the profile disc (15) as well as a projection on the profile disc (15) which engages a slot (17) in the pressure screw (9,10).

4. Disc Brake according to claim 2 or 3, characterised by the profile disc (15), parallel to the centreline (B) of the pressure screw and away from the brake disc (2), being fixed against the pressure screw (9,10).

5. Disc Brake according to claims 2 through 4, characterised by the profile disc (15), when viewed parallel to the centreline (B) of the pressure screw (9, 10), at least partially covering the threads (25) of the pressure screw (9, 10) which when rotated varies the distance between the clamping side brake pad (3) and the brake disc (2).

6. Disc Brake according to claim 5, characterised by the pressure screw (9, 10) with threads (25) being screwed into a thrust piece (11) with step (24), whereby the profile disc (15) upon turning of the pressure screw (9, 10) makes contact with the step (24) past a predetermined value.

7. Disc Brake according to one of the above listed claims, characterised by that the two directions are mutually perpendicular and perpendicular to the centreline (B) of the pressure screw (9, 10).

## Revendications

1. Frein à disque avec
a) un étrier de frein (1) dont les deux flancs chevauchent un disque de frein (2) avec des mâchoires de frein (3, 4) venant en appui contre chacune des faces du disque de frein (2),
b) un mécanisme d'actionnement (5) placé d'un côté du disque de frein (2) avec un arbre d'actionnement (8) se situant pour l'essentiel parallèlement au plan principal (7) du disque de frein (2) et prenant appui, du côté opposé au disque de frein (2), contre l'étrier de frein (1) alors que, vers le disque de frein (2), il se trouve en combinaison d'action avec la mâchoire (3) située côté actionnement, et disposant d'un profil de came qui conduit, lorsque l'arbre (8) tourne autour de son axe longitudinal qui est parallèle au plan principal (7) du disque de frein (2), à un déplacement relatif perpendiculaire au disque de frein (2) de l'étrier de frein (1) et de la mâchoire (3) lorsqu'une force d'actionnement est appliquée à un levier pivotant (6) faisant saillie radialement à l'arbre d'actionnement,
c) un dispositif de rattrapage (13) qui est accouplé d'une part avec le levier d'actionnement (8) et d'autre part avec au moins une broche de poussée (9, 10) par l'intermédiaire d'un élément d'entraînement (14), dont la rotation provoque la modification de la distance entre la mâchoire (3) située côté actionnement et le disque de frein (2), l'élément d'entraînement (14) étant bloqué en rotation par rapport à la broche de poussée (9, 10) mais coulissant axialement avec elle,
caractérisé par le fait que :
au moins une partie de l'élément d'entraînement (14) est mobile par rapport à la broche de poussée (9, 10) dans au moins deux des directions (P, S) perpendiculaires à l'axe longitudinal (B) de la broche de poussée (9,10).

2. Frein à disque suivant la spécification 1 caractérisé par le fait que l'élément d'entraînement (14) et la broche de poussée (9, 10) s'emboîtent sur leur longueur, l'espace annulaire qui en résulte étant occupé par une plaque profilée (15) qui est bloquée en rotation aussi bien avec l'élément d'entraînement (14) qu'avec la broche de poussée (9, 10), et néanmoins mobile en translation par rapport à la broche de poussée (9, 10) dans une première direction (P) perpendiculaire à l'axe longitudinal (B) de la broche de poussée (9, 10) et par rapport à l'élément d'entraînement (14) dans une seconde direction (S) perpendiculaire à l'axe longitudinal (B) de la broche de poussée (9, 10) mais non concourante avec la première direction.

3. Frein à disque suivant la spécification 2 caractérisé par un épaulement (22) sur l'élément d'entraînement (14) qui engrène dans un évidemment (21) de la plaque profilée (15) ainsi que par un appendice (18) sur la plaque profilée (15) qui engrène dans une fente (17) de la broche de poussée (9,10).

4. Frein à disque suivant la spécification 2 ou 3 caractérisé par le fait la plaque profilée (15) est maintenue à la broche de poussée (9, 10) immobile le long de l'axe longitudinal (B) de la broche de poussée (9, 10) et à l'opposé du disque de frein (2).

5. Frein à disque suivant l'une des spécifications 2 à 4 caractérisé par le fait que la plaque profilée (15) recouvre, vu en direction de l'axe longitudinal (B) de la broche de poussée (9, 10), au moins partiellement un filetage (25) de la broche de poussée (9, 10) conduisant à une modification de la distance de la mâchoire de frein (3) située côté actionneur avec le disque de frein (2) lorsque la broche de poussée (9, 10) tourne.

6. Frein à disque suivant la spécification 5 caractérisé par le fait que la broche de poussée (9, 10) est vissée avec le filetage (25) dans un bloc-poussoir (11) avec un lamage (24), la plaque profilée (15) venant en butée contre le lamage (24) lorsque l'on visse la broche de poussée (9, 10) au-delà d'une certaine limite.

7. Frein à disque suivant l'une des spécifications précédentes caractérisé par le fait que les deux directions prependiculaires à l'axe longitudinal (B) de la broche de poussée (9, 10) sont perpendiculaires entre elles.
